(19) Europäisches Patentamt
European Patent Office
Office européen des brevets

(11) EP 0 819 140 B1

(12) # EUROPEAN PATENT SPECIFICATION

(45) Date of publication and mention of the grant of the patent:
**06.12.2000 Bulletin 2000/49**

(21) Application number: **96908115.7**

(22) Date of filing: **22.03.1996**

(51) Int Cl.[7]: **C08F 290/06**, C08G 18/50, C08G 18/61, G02B 1/04

(86) International application number:
**PCT/EP96/01264**

(87) International publication number:
**WO 96/31547 (10.10.1996 Gazette 1996/45)**

(54) **POLYMERIZABLE PERFLUOROALKYLETHER SILOXANE MACROMER**
POLYMERISIERBARER PERFLUOROALKYLÄTHER-SILOXAN-MAKROMER
MACROMERE DE SILOXANE DE PERFLUOROALKYLETHER POLYMERISABLE

(84) Designated Contracting States:
**AT BE CH DE DK ES FI FR GB GR IE IT LI LU NL PT SE**

(30) Priority: **04.04.1995 AU PN216295**
**17.05.1995 AU PN302395**

(43) Date of publication of application:
**21.01.1998 Bulletin 1998/04**

(73) Proprietors:
- **Novartis AG**
  **4058 Basel (CH)**
- **COMMONWEALTH SCIENTIFIC AND INDUSTRIAL RESEARCH ORGANISATION**
  **Campbell, ACT 2612 (AU)**

(72) Inventors:
- **MEIJS, Gordon, Francis**
  **Murrumbena, VIC 3163 (AU)**
- **LAYCOCK, Bronwyn, Glenice**
  **Heidelberg Heights, VIC 3081 (AU)**
- **STEELE, John, Gerard**
  **North Rocks, NSW 2151 (AU)**
- **JOHNSON, Graham**
  **Peakhurst, NSW 2210 (AU)**

(56) References cited:
**EP-A- 0 330 618**
**EP-A- 0 461 270**
**WO-A-94/15980**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 819 140 B1

Printed by Jouve, 75001 PARIS (FR)

## Description

The invention relates to macromers, polymers and polymeric articles particularly suited for ocular applications and as cell growth substrates. More specifically this invention relates to polymers that are suitable for use in contact lenses, and opthalmic devices, such as epikeratoprostheses.

A wide variety of research has been conducted in the field of biocompatible polymers. The definition of biocompatible depends on the particular application for which the polymer is designed. In order to properly function as a contact lens a material must have a variety of properties including biological and chemical inertness, mechanical stability, optical transparency, oxygen permeability, and tear wettability. It is particularly advantageous for a contact lens to be able to transmit oxygen to the cornea and to be soft and comfortable to permit wear for extended periods. In order to function properly as a corneal implant, such as an epikeratoprosthesis, the polymer, in addition, must allow healthy adhesion and growth of corneal epithelium and be highly biostable as an implant.

Contact lenses can be classified into hard and rigid contact lenses, such as those manufactured from poly (methyl methacrylate), and soft flexible contact lenses such as those manufactured from poly(2-hydroxyethyl methacrylate). Both of these basic types of contact lenses suffer from various limitations. Hard and rigid contact lenses are uncomfortable to wear and thus are not well-tolerated by some patients. Although poly(methyl methacrylate) hard lenses allow the transmission of virtually no oxygen through the lens to support the cornea, there are some classes of rigid lenses that do allow good oxygen passage (for example, silicon-based materials). Notwithstanding this, they suffer from the aforesaid limitation of poor comfort due to their lack of softness. For optimum comfort and handling the modulus of elasticity of the lens material would be from 0.5 to 5.0 MPa, preferably from 1.0 to 2.5 MPa.

Conventional soft contact lenses suffer from the disadvantage that there is insufficient oxygen transmissibility through the lens to support normal corneal physiology. Accordingly, they cannot be worn continuously for extended periods. Clinical symptoms of this lens-induced hypoxia include limbal redness and corneal swelling. Ocular infection may result from extended hypoxia induced by contact lens wear. A minimum oxygen transmissibility would be above 50 Barrer, preferably above 70 Barrer, more preferably above 87 Barrer for continuous wear.

There is a long felt need for contact lens materials that combine the comfort of a soft contact lens with an oxygen transmissibility sufficient to maintain normal corneal physiology. In one aspect the present invention provides materials which address this need.

US Patent 4,818,801 describes perfluoropolyether polymers for use as contact lenses. While some lenses manufactured from the perfluoropolyether polymers described in U.S. 4,818,801 have excellent oxygen permeability such lenses remain too stiff, or of too high a modulus, to be useful as comfortable extended wear contact lenses. US Patent 4,818,801 does not teach the use of a siloxane block or unit as a component of the macromonomer. EP-A-330,618 discloses a wettable, rigid gas permeable, substantially non-swellable contact lens for the manufacture of which a monomer is disclosed which comprises a siloxane portion and two or more segments of formula X, as defined therein. In general terms said formula X is an unsubstituted or substituted polyoxyalkylene block the subunits of which do have at least two carbon atoms, such as oxyethylene. Subunits such as ($CF_2O$) are not disclosed within the segments of formula X.

There is required a polymer which possesses the combination of high oxygen permeability and a low modulus. We have now found a macromonomer which is suitable for use in the manufacture of such polymers. Accordingly, in its main aspect, this invention provides a macromonomer of the formula I:

$$\text{Q-PFPE-L-M-L-PFPE-Q} \qquad \text{(I)}$$

wherein

Q may be the same or different and is a polymerizable group;

PFPE may be the same or different and is a perfluorinated polyether of formula II:

$$-OCH_2CF_2O\ (CF_2CF_2O)_x(CF_2O)_y\ CF_2CH_2O- \qquad \text{(II)}$$

wherein the $CF_2CF_2O$ and $CF_2O$ units may be randomly distributed or distributed as blocks throughout the chain, x is 0 to 20 and y is 0 to 25 with the proviso that y = 0 is excluded, and wherein x and y may be the same or different such that the molecular weight of the PFPE is in the range of from 242 to 4000;

L may be the same or different and is a bivalent residue of any difunctional moiety able to react with hydroxyl or amino; and

M is a residue from a difunctional polymer or copolymer wherein M has a molecular weight of 180 to 6000 comprising silicone repeat units of formula III

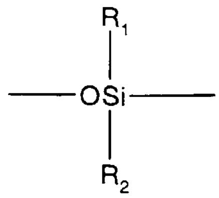

(III)

where $R^1$ and $R^2$ may be the same or different and are selected from the group consisting of hydrogen, alkyl, aryl, halosubstituted alkyl; wherein M contains a terminal functionality at each end independently selected from the group consisting of hydroxy and amino. $R^1$ and $R^2$ are preferably methyl.

Q is a polymerizable group which preferably comprises an ethylenically unsaturated moiety which can enter into a polymerization reaction. The polymerizable groups at each end of the macromonomer may be the same or different. Preferably Q is a group of the formula A

$$P_1\text{-}(Y)_m\text{-}(R'\text{-}X_1)_p\text{-} \qquad (A)$$

wherein

$P_1$ is a free-radical-polymerizable group;
Y is -CONHCOO-, -CONHCONH-, -OCONHCO-, -NHCONHCO-, -NHCO-, -CONH-, -NHCONH-, -COO-, -OCO-, -NHCOO- or -OCONH-;
m and p, independently of one another, are 0 or 1;
R' is a divalent radical of an organic compound having up to 20 carbon atoms;
$X_1$ is -NHCO-, -CONH-, -NHCONH-, -COO-, -OCO-, -NHCOO- or -OCONH-.

A free-radical-polymerizable group $P_1$ is, for example, alkenyl, alkenylaryl or alkenylarylenealkyl having up to 20 carbon atoms. Examples of alkenyl are vinyl, allyl, 1-propen-2-yl, 1-buten-2-, -3- and -4-yl, 2-buten-3-yl, and the isomers of pentenyl, hexenyl, octenyl, decenyl and undecenyl. Examples of alkenylaryl are vinylphenyl, vinylnaphthyl or allylphenyl. An example of alkenylarylenealkyl is o-, m-, or p-vinylbenzyl.
$P_1$ is preferably alkenyl or alkenylaryl having up to 12 carbon atoms, particularly preferably alkenyl having up to 8 carbon atoms, in particular alkenyl having up to 4 carbon atoms.
Y is preferably -COO-, -OCO-, -NHCONH-, -NHCOO-, -OCONH-, NHCO- or -CONH-, particularly preferably -COO-, -OCO-, NHCO- or -CONH-, and in particular, -COO- or -OCO-.
$X_1$ is preferably -NHCONH-, -NHCOO- or -OCONH-, particularly preferably -NHCOO- or -OCONH-.
In a preferred embodiment, the indices, m and p, are not simultaneously zero. If p is zero, m is preferably 1.
R' is preferably alkylene, arylene, a saturated bivalent cycloaliphatic group having 6 to 20 carbon atoms, arylenealkylene, alkylenearylene, alkylenearylenealkylene or arylenealkylenearylene.
Preferably, R' is a divalent radical having up to 12 carbon atoms, particularly preferably a divalent radical having up to 8 carbon atoms. In a preferred embodiment, R' is furthermore alkylene or arylene having up to 12 carbon atoms. A particularly preferred embodiment of R' is lower alkylene, in particular lower alkylene having up to 4 carbon atoms.
It is particularly preferred that Q be selected from the group consisting of acryloyl, methacryloyl, styryl, acrylamido, acrylamidoalkyl, urethanemethacrylate or any substituted derivatives thereof. Most preferably Q is a compound of formula A wherein $P_1$ is alkenyl of up to 4 carbon atoms, Y is -COO-, R' is alkylene of up to 4 carbon atoms, $X_1$ is -NHCOO- and m and p are each one.
Suitable substituents may be selected from alkyl, alkenyl, alkynyl, aryl, halo, haloalkyl, haloalkenyl, haloalkynyl, haloaryl, hydroxy, alkoxy, alkenyloxy, aryloxy, haloalkoxy, haloalkenyloxy, haloaryloxy, amino, alkylamino, alkenylamino, alkynylamino, arylamino, acyl, aroyl, alkenylacyl, arylacyl, acylamino, alkyl-sulphonyloxy, arylsulphenyloxy, heterocyclyl, heterocycyloxy, heterocycylamino, haloheterocyclyl, alkoxycarbonyl, alkylthio, alkylsulphonyl, arylthio, arylsulphonyl, aminosulphonyl, dialkylamino and dialkylsulphonyl, having up to 10 carbon atoms.
x in formula II is in the range of from 0 to 20, preferably in the range from 8 to 12, and y is in the range from

0 to 25 with the proviso that y = 0 is excluded, more preferably in the range from 10 to 14.

The linking group L is the bivalent residue of any difunctional moiety able to react with hydroxyl. Suitable precursors to L are α,ω-diepoxides, α,ω-diisocyanates, α,ω-diisothiocyanates, α,ω-diacylhalides, α,ω-dithioacylhalides, α,ω-dicarboxylic acids, α,ω-dithiocarboxylic acids, α,ω-dianhydrides, α,ω-dilactones, α,ω-dialkylesters, α,ω-dihalides, α,ω-dialkyl ethers, α,ω-dihydroxymethylamides. It is preferred that the linking group be a bivalent residue (-C(O)-NH-R-NH-C(O)-) of a diisocyanate wherein R is a divalent organic radical having up to 20 carbon atoms.

The divalent radical R is, for example, alkylene, arylene, alkylenearylene, arylenealkylene or arylenealkylenearylene having up to 20 carbon atoms, a saturated bivalent cycloaliphatic group having 6 to 20 carbon atoms or cycloalkylenealkylenecycloalkylene having 7 to 20 carbon atoms.

In a preferred embodiment, R is alkylene, arylene, alkylenearylene, arylenealkylene or arylenealkylenearylene having up to 14 carbon atoms or a saturated divalent cycloaliphatic group having 6 to 14 carbon atoms. In a particularly preferred embodiment, R is alkylene or arylene having up to 12 carbon atoms or a saturated bivalent cycloaliphatic group having 6 to 14 carbon atoms.

In a preferred embodiment, R is alkylene or arylene having up to 10 carbon atoms or a saturated bivalent cycloaliphatic group having 6 to 10 carbon atoms.

In a particularly preferred meaning, R is a radical derived from a diisocyanate, for example from hexane 1,6-diisocyanate, 2,2,4-trimethylhexane 1,6-diisocyanate, tetramethylene diisocyanate, phenylene 1,4-diisocyanate, toluene 2,4-diisocyanate, toluene 2,6-diisocyanate, m- or p-tetramethylxylene diisocyanate, isophorone diisocyanate or cyclohexane 1,4-diisocyanate.

Aryl is a carbocyclic aromatic radical which is unsubstituted or substituted preferably by lower alkyl or lower alkoxy. Examples are phenyl, tolyl, xylyl, methoxyphenyl, t-butoxyphenyl, naphthyl and phenanthryl.

Arylene is preferably phenylene or naphthylene, which is unsubstituted or substituted by lower alkyl or lower alkoxy, in particular 1,3-phenylene, 1,4-phenylene or methyl-1,4-phenylene, 1,5-naphthylene or 1,8-naphthylene.

A saturated bivalent cycloaliphatic group is preferably cycloalkylene, for example cyclohexylene or cyclohexylene(lower alkylene), for example cyclohexylenemethylene, which is unsubstituted or substituted by one or more lower alkyl groups, for example methyl groups, for example trimethylcyclohexylenemethylene, for example the bivalent isophorone radical.

For the purposes of the present invention, the term "lower" in connection with radicals and compounds, unless defined otherwise, denotes, in particular, radicals or compounds having up to 8 carbon atoms, preferably having up to 4 carbon atoms.

Lower alkyl has, in particular, up to 8 carbon atoms, preferably up to 4 carbon atoms, and is, for example, methyl, ethyl, propyl, butyl, tert-butyl, pentyl, hexyl or isohexyl.

Alkylene has up to 12 carbon atoms and can be straight-chain or branched. Suitable examples are decylene, octylene, hexylene, pentylene, butylene, propylene, ethylene, methylene, 2-propylene, 2-butylene and 3-pentylene.

Lower alkylene is alkylene having up to 8 carbon atoms, particularly preferably up to 4 carbon atoms. Particularly preferred meanings of lower alkylene are propylene, ethylene and methylene.

The arylene unit in alkylenearylene or arylenealkylene is preferably phenylene, unsubstituted or substituted by lower alkyl or lower alkoxy, and the alkylene unit therein is preferably lower alkylene, such as methylene or ethylene, in particular methylene. These radicals are therefore preferably phenylenemethylene or methylenephenylene.

Lower alkoxy has, in particular, up to 8 carbon atoms, preferably up to 4 carbon atoms, and is, for example, methoxy, ethoxy, propoxy, butoxy, tert-butoxy or hexyloxy.

Arylenealkylenearylene is preferably phenylene(lower alkylene)phenylene having up to 8, in particular up to 4, carbon atoms in the alkylene unit, for example phenyleneethylenephenylene or phenylenemethylenephenylene.

Some examples of very preferred diisocyanates from which bivalent residues L are derived include trimethylhexamethylenediisocyanate (TMHMDI), isophorone diisocyanate (IPDI), methylenediphenyl diisocyanate (MDI) and 1,6-hexamethylenediisocyanate (HMDI).

The difunctional polymer from which M is derived contains an independently selected terminal functionality at each end which reacts with the precursor of the linking group L so that a covalent linkage is formed. The terminal functionality is hydroxyl or amino. Such functionality may be joined to the siloxane units in M by means of an alkylene group or other non reactive spacer. Preferred terminal moieties are hydroxyalkyl, hydroxyalkoxyalkyl and alkylamino. Especially preferred hydroxyalkyls are hydroxypropyl and hydroxybutyl; especially preferred hydroxyalkoxyalkyls are hydroxyethoxyethyl and hydroxyethoxypropyl.

Preferred M residues in formula I as specified above are of formula B

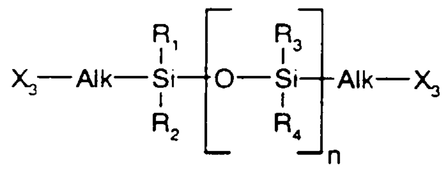 (B)

where n is an integer from 5 to 100; Alk is alkylene having up to 20 carbon atoms, uninterrupted or interrupted by oxygen; the radicals $R_1$, $R_2$, $R_3$ and $R_4$, independently of one another, are alkyl, aryl or halosubstituted alkyl; and $X_3$ is -O- or -NH-.

In a preferred meaning, n is an integer from 5 to 70, particularly preferably 8 to 50, in particular 10 to 28.

In a preferred meaning, the radicals $R_1$, $R_2$, $R_3$ and $R_4$ are, independently of one another, lower alkyl having up to 8 carbon atoms, particularly preferably lower alkyl having up to 4 carbon atoms, especially lower alkyl having up to 2 carbon atoms. A further particularly preferred embodiment of $R_1$, $R_2$, $R_3$ and $R_4$ is methyl.

Alkylene interrupted by oxygen is preferably lower alkylene-oxy-lower alkylene having up to 6 carbons in each of the two lower alkylene moieties, more preferably lower alkylene-oxy-lower alkylene having up to 4 carbons in each of the two lower alkylene moieties, examples being ethylene-oxy-ethylene or ethylene-oxy-propylene.

Halosubstituted alkyl is preferably lower alkyl substituted by one or more, especially up to three, halogens such as fluoro, chloro or bromo, examples being trifluoromethyl, chloromethyl, heptafluorobutyl or bromoethyl.

A preferred macromonomer is one in which the molecular weight of the perfluorinated polyether is in the range of from 800 to 4,000, L is the bivalent residue derived from trimethylhexamethylene diisocyanate (TMHMDI) and Q is the residue derived from isocyanatoethyl methacrylate. It is particularly preferred that the molecular weight of the perfluorinated polyether is about 2,000 and the molecular weight of M is about 1,000.

A preferred macromonomer of the present invention is of formula IV:

$$CH_2{=}C(CH_3)\text{-}COO\text{-}C_2H_4\text{-}NHCO\text{-}PFPE\text{-}CONH\text{-}R\text{-}NHCO\text{-}$$

$$OCH_2CH_2CH_2\text{-}Si(CH_3)_2\text{-}(OSi(CH_3)_2)_{11}\text{-}CH_2CH_2CH_2O\text{-}CONH\text{-}R\text{-}$$

$$\text{-}NHCO\text{-}PFPE\text{-}CONH\text{-}C_2H_4\text{-}OCO\text{-}C(CH_3){=}CH_2 \quad \text{(IV)}$$

wherein PFPE is of formula II, and R is the trimethyhexamethylene component of TMHMDI (trimethylhexamethylene diisocyanate) and wherein x is 10 and y is 12 .

The macromonomers of the present invention may be conveniently prepared from commercially available perfluorinated polyethers (such as Z-Dol, available from Minnesota Mining and Manufacturing Company, St Paul, Minnesota, USA) and commercially available bishydroxyalkyl or bishydroxyalkoxyalkyl terminated poly(dimethylsiloxanes) (such as Shin-Etsu KF-6001) by procedures well known in the art of polymer synthesis. These procedures typically involve mixing the silicone-based group M with a precursor to the linking group (such as trimethylhexamethylenediisocyanate). These are allowed to react and then the perfluoropolyether is added, followed by the precursor to the polymerisable group. Optionally, catalysts (such as dibutyltin dilaurate) and solvents may be used.

In another aspect, this invention provides a process for the production of polymers. The macromonomers of the present invention may be copolymerized or homopolymerized in the presence of a suitable initiator to afford a transparent polymer. Standard methods well known in the art for effecting polymerization may be utilized, with free radical polymerization being preferred. Free radical polymerization can be simply carried out by irradiating (using ultraviolet light) monomer mixtures containing a UV initiator, such as benzoin methyl ether, in an appropriate container or vessel. The mixture is irradiated for a sufficient time to enable polymerization between monomers to take place. Alternatively, thermal initiation using a thermal initiator such as azobisisobutyronitrile, can be employed.

The macromonomer can be converted to a polymer neat or in the presence of one or more solvents and/or comonomers. While the structure of the macromonomer has the most significant effect on the modulus of the resultant polymer, the choice of solvent and comonomer also has an effect. Useful solvents include those selected from the following classes: esters, alcohols, ethers, and halogenated solvents. Fluorinated solvents are particularly useful and their use in combination with other solvents (in ratios varying from 1:9 to 9:1) from the classes above is especially desirable. Solvent concentrations of between 0-70% w/w, particularly 10-50% w/w in the polymerization mixture are desirable. Preferred solvents include acetates, particularly isopropyl acetate and tert-butyl acetate, 2-(trifluoromethyl)-2-propanol, chlorofluoroalkanes, particularly trichlorotrifluoroethane, and perfluorinated alkanes, such as perfluoro-1,3-dimethylcyclohexane.

Comonomers comprising one or more ethylenically unsaturated groups which can enter into a reaction to form a copolymer may be incorporated. It is preferred that the ethylenically unsaturated group be selected from the group consisting of acryloyl, methacryloyl, styryl, acrylamido, acrylamidoalkyl, urethanemethacrylate, or any substituted derivatives thereof.

A comonomer present in the novel polymer can be hydrophilic or hydrophobic or a mixture thereof. Suitable comonomers are, in particular, those which are usually used in the production of contact lenses and biomedical materials. A hydrophobic comonomer is taken to mean a monomer which typically gives a homopolymer which is insoluble in water and can absorb less than 10% by weight of water. Analogously, a hydrophilic comonomer is taken to mean a monomer which typically gives a homopolymer which is soluble in water or can absorb at least 10% by weight of water.

Suitable hydrophobic comonomers are, without limitation thereto, $C_1$-$C_{18}$alkyl and $C_3$-$C_{18}$cycloalkyl acrylates and methacrylates, $C_3$-$C_{18}$alkylacrylamides and -methacrylamides, acrylonitrile, methacrylonitrile, vinyl $C_1$-$C_{18}$alkanoates, $C_2$-$C_{18}$alkenes, $C_2$-$C_{18}$haloalkenes, styrene, (lower alkyl)styrene, lower alkyl vinyl ethers, $C_2$-$C_{10}$perfluoroalkyl acrylates and methacrylates and correspondingly partially fluorinated acrylates and methacrylates, $C_3$-$C_{12}$perfluoroalkylethylthiocarbonylaminoethyl acrylates and methacrylates, acryloxy- and methacryloxyalkylsiloxanes, N-vinylcarbazole, $C_1$-$C_{12}$alkyl esters of maleic acid, fumaric acid, itaconic acid, mesaconic acid.

Preference is given, for example, to acrylonitrile, $C_1$-$C_4$alkyl esters of vinylically unsaturated carboxylic acids having 3 to 5 carbon atoms or vinyl esters of carboxylic acids having up to 5 carbon atoms.

Examples of suitable hydrophobic comonomers are methyl acrylate, ethyl acrylate, propyl acrylate, isopropyl acrylate, cyclohexyl acrylate, 2-ethylhexyl acrylate, methyl methacrylate, ethyl methacrylate, propyl methacrylate, butyl acrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyltoluene, vinyl ethyl ether, perfluorohexylethylthiocarbonylaminoethyl methacrylate, isobornyl methacrylate, trifluoroethyl methacrylate, hexafluoroisopropyl methacrylate, hexafluorobutyl methacrylate, tristrimethylsilyloxysilylpropyl methacrylate (hereinafter: Tris methacrylate), tristrimethylsilyloxysilylpropyl acrylate (hereinafter: Tris acrylate), 3-methacryloxy propylpentamethyldisiloxane and bis(methacryloxypropyl)tetramethyldisiloxane.

Preferred examples of hydrophobic comonomers are methyl methacrylate, Tris acrylate, Tris methacrylate and acrylonitrile.

Suitable hydrophilic comonomers are, without this being an exhaustive list, hydroxyl-substituted lower alkyl acrylates and methacrylates, acrylamide, methacrylamide, (lower alkyl)acrylamides and -methacrylamides, ethoxylated acrylates and methacrylates, hydroxyl-substituted (lower alkyl)acrylamides and -methacrylamides, hydroxyl-substituted lower alkyl vinyl ethers, sodium vinylsulfonate, sodium styrenesulfonate, 2-acrylamido-2-methylpropanesulfonic acid, N-vinylpyrrole, N-vinyl-2-pyrrolidone, 2-vinyloxazoline, 2-vinyl-4,4'-dialkyloxazolin-5-one, 2- and 4-vinylpyridine, vinylically unsaturated carboxylic acids having a total of 3 to 5 carbon atoms, amino(lower alkyl)- (where the term "amino" also includes quaternary ammonium), mono(lower alkylamino)(lower alkyl) and di(lower alkylamino)(lower alkyl) acrylates and methacrylates, allyl alcohol and the like. Preference is given, for example, to N-vinyl-2-pyrrolidone, acrylamide, methacrylamide, hydroxyl-substituted lower alkyl acrylates and methacrylates, hydroxy-substituted (lower alkyl)acrylamides and -methacrylamides and vinylically unsaturated carboxylic acids having a total of 3 to 5 carbon atoms.

Examples of suitable hydrophilic comonomers are hydroxyethyl methacrylate (HEMA), hydroxyethyl acrylate, hydroxypropyl acrylate, trimethylammonium 2-hydroxy propylmethacrylate hydrochloride (Blemer® QA, for example from Nippon Oil), dimethylaminoethyl methacrylate (DMAEMA), dimethylaminoethyl (meth)acrylamide, acrylamide, methacrylamide, N,N-dimethylacrylamide (DMA), allyl alcohol, vinylpyridine, glycerol methacrylate, N-(1,1-dimethyl-3-oxobutyl)acrylamide, N-vinyl-2-pyrrolidone (NVP), acrylic acid, methacrylic acid.

Preferred hydrophilic comonomers are trimethylammonium 2-hydroxy propylmethacrylate hydrochloride, 2-hydroxyethyl methacrylate, dimethylaminoethyl methacrylate, trimethylammonium 2-hydroxypropylmethacrylate hydrochloride, N,N-dimethylacrylamide and N-vinyl-2-pyrrolidone.

As stated hereinbefore, suitable comonomers include fluorine- and silicon-containing alkyl acrylates and hydrophilic comonomers, which may be selected from the wide range of materials available to a person skilled in the art, and mixtures thereof. Particularly preferred comonomers include dihydroperfluoroalkyl acrylates, such as dihydroperfluorooctyl acrylate and 1,1-dihydroperfluorobutyl acrylate, trihydroperfluoroalkyl acrylates, tetrahydroperfluoroalkyl acrylates, tris(trimethylsilyloxy)propyl methacrylate or acrylate, and amine-containing comonomers, such as N,N-dimethylaminoethyl methacrylate, N,N-dimethyl acrylamide and N,N-dimethylaminoethyl-acrylamide. The preferred range for addition of individual comonomers into the formulation is from 0 to 60% by weight, most preferably 0 to 40% by weight of the formulation. Mixtures of macromonomers of formula I may also be used to make suitable copolymers with or without other comonomers. Other macromonomers (monofunctional or difunctional) may also be incorporated with or without further comonomers.

A polymer network can, if desired, be reinforced by addition of a crosslinking agent, for example a polyunsaturated crosslinking comonomer. In this case, the term crosslinked polymers is used. The invention, therefore, furthermore relates to a crosslinked polymer comprising the product of the polymerization of a macromer of the formula (I), if desired with at least one vinylic comonomer and with at least one crosslinking comonomer.

Examples of typical crosslinking comonomers are allyl (meth)acrylate, lower alkylene glycol di(meth)acrylate, poly(lower alkylene) glycol di(meth)acrylate, lower alkylene di(meth)acrylate, divinyl ether, divinyl sulfone, di- and trivinylbenzene, trimethylolpropane tri(meth)acrylate, pentaerythritol tetra(meth)acrylate, bisphenol A di(meth)acrylate, methylenebis(meth)acrylamide, triallyl phthalate and diallyl phthalate.

If a crosslinking comonomer is used, the amount used is in the range of from 0.05 to 20 % of the expected total weight of polymer, preferably the comonomer is in the range of 0.1 to 10 %, and more preferably in the range of 0.1 to 2 %.

According to a further aspect of the present invention there is provided a polymer produced by the process herein defined wherein the polymer is formed from at least one macromonomer as herein defined.

According to a still further aspect of the present invention there is provided a soft contact lens manufactured from polymers or copolymers as hereinbefore described. Soft contact lenses are crosslinked polymer disks with surfaces of differing radii of curvature. The radii are selected in combination with the refractive index of the polymer so that the desired optical correction is obtained and the inner surface of the lens matches the contour of wearer's cornea. They are normally sold in sterile saline. Optionally the surface of the lens may be modified by coating using procedures well known to the art, such as plasma polymerisation, glow discharge or grafting of a more hydrophilic polymer.

By way of example, in the manufacture of such lenses the appropriate quantities of polymerizable monomers, solvent (if required) and photoinitiator are mixed together to form a polymerization mixture. The polymerization mixture is then flushed with nitrogen and the required quantity dispensed into the concave half of a polypropylene mould. The mould is closed and clamped and the assembly is placed into a UV irradiation cabinet equipped with UV lamps. The irradiation is performed for the required time and then the halves of the mould are separated. The polymerized lens is extracted in an appropriate solvent (for example, an isopropyl or tert-butyl acetate/fluorinated solvent mixture). The solvent is then thoroughy exchanged with an alcohol (for example, isopropyl alcohol) and subsequently with saline to yield the product lens.

Another aspect of this invention is the use of the polymers in applications depending on the growth of cells. The polymers and polymeric materials of this invention, although hydrophobic in nature, unexpectedly have the property of being suitable for the attachment and growth of cells and outgrowth of corneal tissue, and have properties that make them suitable for use as corneal implants (which may be referred to as "artificial corneas"), cell growth substrates, materials for the attachment and growth of human or animal cells *in vivo* or *in vitro,* medical implants (such as implantable semipermeable membrane materials, tissue implants in cosmetic surgery, implants containing hormone secreting cells such as pancreatic islet cells, breast implants, and the like), in artificial organs, tissue culture apparatus (such as bottles, trays, dishes and the like) in biological reactors (such as those used in the production of valuable proteins and other components by cell culture), in optical instruments, and the like. The polymers may also be used in soft membrane materials, controlled drug release compositions, gas separation membranes, ion transport membranes and the like.

According to another aspect of this invention there is provided a corneal implant manufactured from polymers or copolymers as described herein. Corneal implants may be produced according to the procedures already described for the production of soft contact lenses. Corneal implants may be placed by way of conventional surgical techniques beneath, within, or through corneal epithelial tissue, or within the corneal stroma or other tissue layers of the cornea. Such implants may change the optical properties of the cornea (such as to correct visual deficiencies) and/or change the appearance of the eye, such as pupil coloration. A corneal implant may comprise an optical axis region which on implantation covers the pupil and provides visual activity, and a region which surrounds the periphery of the optical axis region. The implant may have the same visual activity across its dimensions.

It has been found that the flow of high molecular weight tissue fluid components such as proteins and glycoproteins (for example, growth factors, peptide and protein hormones, and proteins associated with the transport of essential metals) and the like across a corneal implant, that is, between epithelial cells and stromal cells and even the endothelial layer and beyond, is important for long term maintenance and viability of tissue anterior and posterior to a corneal implant. Accordingly, a corneal implant is advantageously prepared with a porosity sufficient to allow passage therethrough of tissue fluid components having a molecular weight greater than about 10,000 daltons ($1.66 \times 10^{-23}$ kg), thereby providing for a flux of tissue fluid components in addition to small molecular weight nutrients and respiratory gases between cells anterior of the implant and cells posterior thereof. This aspect is disclosed in International Patent Application No. PCT/EP93/03680.

The porosity of the corneal implant may be provided by virtue of the material from which the implant is formed, that is, by the inherent porosity of the material. Alternatively, pores may be introduced into the polymers or copolymers according to this invention from which the implant is formed by various procedures well known in the art such as those described in WO 90/07575, WO 91/07687, US Patent No 5,244,799, US Patent No 5,238,613, US Patent No 4,799,931 and US Patent No 5,213,721.

Regardless of the methods of formation of the requisite porosity of the implant of the invention, the implant preferably has a porosity sufficient to admit proteins and other biological macromolecules of a molecular weight up to and greater than 10,000 daltons, such as from 10,000 to 1,000,000 daltons (1.66 x $10^{-23}$ kg to 1.66 x $10^{-21}$ kg), but not sufficient to admit cells and thus tissue invasion into the optical axis region of the corneal onlay. Where porosity of the implant is provided by pores, the optical axis region comprises a plurality of pores, the number of which is not in any way limiting, but which is sufficient to provide flow of tissue components between the anterior and posterior regions of an implant. Preferably, the pores formed within the optical axis region do not cause refraction of visible light to an extent that would cause any problem with regard to vision correction. It is to be understood that the term pore does not put any geometric limitation on the nature of the pores which may be of regular or irregular morphology. It should be recognized that not all pores may be of the same diameter.

Outside of the optical axis region, the corneal implant may have the same porosity as the optical axis region. Alternatively, this region of the implant surrounding the periphery of the optical axis region, which may be referred to as the skirt, may allow the ingrowth of cells of the cornea thereby assisting in anchorage of the implant to the eye.

Porosity in the skirt may be an inherent feature of the material from which the skirt is formed. In this regard it is to be appreciated that the skirt may be formed of the same material as the optical axis region and may be integral therewith. In this situation, pores of differing diameter may be formed in the optical axis region and the skirt. Alternatively, the skirt may be formed of a different material from the optical axis region, which material is of a higher porosity than the optical axis region so as to allow tissue ingrowth. Preferably the skirt may be comprised of an optically transparent polymer as is the optical axis region, but alternatively the skirt may be comprised of an optically non-transparent material or may be made of a porous material that is not optically transparent.

The polymers and polymeric materials of this invention may support colonization with tissue cells (for example, vascular endothelial cells, fibroblasts, bone-derived cells etc) without the need for specific surface modifications in order to stimulate cell adhesion and growth. This is advantageous as processing costs can be minimized. Alternatively the polymers and polymeric materials according to this invention can be surface modified by techniques well known in the art such as radio frequency glow discharge plasma modification (see US Patent No 4,919,659 and PCT/AU89/00220) or radiation grafting or chemical treatment.

The polymers and polymeric materials of this invention may be surface coated with one or more components which promote the growth of tissue. For example, such materials include fibronectin, chondroitan sulphate, collagen, laminin, cell attachment proteins, anti-gelatine factor, cold insoluble globulin, chondronectin, epidermal growth factor, mussel adhesive protein and the like, and/or derivatives, active fragments and mixtures thereof. Fibronectin, epidermal growth factor, and/or derivatives, active fragments and mixtures thereof are particularly useful. Such surface coating may be applied after surface modification, as described above, if necessary.

Polymers according to this invention may combine cell attachment properties with good biostability and inherent resistance to fouling. The mechanical properties of the polymers according to the invention are suitable for use as corneal implants, with the modulus of the materials generally being between about 0.5 to 10 MPa. This modulus provides a suitable flexibility for a corneal implant to allow insertion into the eye, for example, anterior of the Bowmans membrane region.

Throughout this specification and the claims which follow, unless the context requires otherwise, the word "comprise", or variations such as "comprises" or "comprising", will be understood to imply the inclusion of a stated integer or group of integers but not the exclusion of any other integer or group of integers.

The present invention is further described in the following examples. If not otherwise specified, all parts are by weight. Temperatures are in degrees Celsius. Molecular weights of macromers or polymers are number average molecular weights if not otherwise specified.

**EXAMPLE 1:** This example illustrates the preparation of a macromonomer of the present invention. Into a 250 mL round bottomed flask is placed 24.18 g of commercially available hydroxypropyl terminated polydimethylsiloxane of molecular weight 947, and 10.76 g of distilled trimethylhexamethylene diisocyanate. The mixture is shaken vigorously for several minutes and then, 0.04 g of dibutyltin dilaurate is added. The mixture is then shaken for a further five minutes before being stirred overnight. A mild exotherm is observed during the first hour. To the reaction mixture is then added 103.30 g of commercially available PFPE of approximate molecular weight 2000 (hydroxyl number 55.40), and 0.10 g of dibutyltin dilaurate. After again being vigorously shaken for several minutes, the mixture is stirred overnight. An infrared spectrum is run to confirm the disappearance of the isocyanate peak. To the mixture is then added 7.92 g of freshly distilled isocyanatoethyl methacrylate. The flask is shaken vigorously and the mixture stirred overnight. Again, an infrared spectrum is run to confirm the disappearance of isocyanate. The resulting viscous liquid has the formula given in Formula IV above.

**EXAMPLE 2:** The following composition is placed in a polypropylene lens mould (0.1 mm thick) and polymerized for three hours under irradiation from 365 nm UV lamps.

| | |
|---|---|
| Macromonomer produced in Example 1 | 76.2 parts |
| N,N-Dimethylaminoethyl acrylamide | 13.5 parts |
| Tris methacrylate | 10.5 parts |
| Benzoin methyl ether | 0.3 parts |
| Isopropyl acetate | 67 parts |

After polymerisation is complete, the resulting lenses are demoulded and extracted at room temperature in trichlorotrifluoroethane for three hours, then placed in tert-butyl acetate (t-BuAc) overnight, then in a 50/50 (v/v) mixture of t-BuAc/isopropyl alcohol (IPA) for three hours and finally into neat IPA for 3 hours. The lenses are then dried overnight at 30°C in a vacuum oven before being hydrated in saline for several days. After extraction and hydration, the oxygen transmissibility is measured on the resulting clear polymer lens and shown to be 157 Barrers. The modulus is 1.31 MPa. The water content is 20%.

**EXAMPLE 3:** The following composition is placed in a polypropylene lens mould (0.1 mm thick) and polymerized for three hours under irradiation from 365 nm UV lamps.

| | |
|---|---|
| Macromonomer of Example 1 | 83.0 parts |
| N,N-Dimethylaminopropyl methacrylamide | 17.0 parts |
| Benzoin methyl ether | 0.3 parts |
| Isopropyl acetate | 67 parts |

After extraction and hydration using the procedure described in Example 2, the oxygen transmissibility is measured on the resulting clear polymer and is 142 Barrers. The modulus is 2.75 MPa. The water content is 16%.

**EXAMPLE 4:** The following composition is placed in a polypropylene lens mould (0.1 mm thick) and polymerized for three hours under irradiation from 365 nm UV lamps.

| | |
|---|---|
| Macromonomer of Example 1 | 67.7 parts |
| N,N-Dimethylacrylamide | 23.0 parts |
| Tris methacrylate | 9.7 parts |
| Benzoin methyl ether | 0.3 parts |
| Isopropyl acetate | 67 parts |

After extraction and hydration using the procedure described in Example 2, the oxygen transmissibility is measured on the resulting clear polymer and is 95 barrers. The modulus is 2.0 MPa. The water content is 16%.

**EXAMPLE 5:** The following composition is placed in a polypropylene lens mould (0.1 mm thick) and polymerized for three hours under irradiation from 365 nm UV lamps.

| | |
|---|---|
| Macromonomer of Example 1 | 86.2 parts |
| N,N-Dimethylaminoethyl acrylamide | 13.8 parts |
| Benzoin methyl ether | 0.3 parts |
| Isopropyl acetate | 67 parts |

After extraction and hydration using the procedure described in Example 2, the oxygen transmissibility is measured on the resulting clear polymer and is 158 barrers. The modulus is 1.24 MPa. The water content is 14%.

**EXAMPLE 6:** The following composition is placed in a polypropylene lens mould (0.1 mm thick) and polymerized for three hours under irradiation from 365 nm UV lamps.

| | |
|---|---|
| Macromonomer of Example 1 | 75.3 parts |
| N,N-Dimethylaminoethyl methacrylate | 24.7 parts |
| Benzoin methyl ether | 0.3 parts |
| Isopropyl acetate | 67 parts |

After extraction and hydration using the procedure described in Example 2, the oxygen transmissibility is measured on the resulting clear polymer and is 85 barrers. The polymer is soft and flexible. The water content is 17%.

**EXAMPLE 7:** The following composition is placed in a polypropylene lens mould (0.2 mm thick) and polymerised for three hours under irradiation from 365 nm UV lamps.

| | |
|---|---|
| Macromonomer of Example 1 | 60 parts |
| Benzoin methyl ether | 0.3 parts |
| Isopropyl acetate | 40 parts |

After demoulding, discs of the polymer were extracted at 37°C in PF5060 for three hours, then placed in isopropyl acetate (IPAc) overnight, then in a 50/50 (v/v) mix of IPAc - isopropyl alcohol (IPA) for three hours and into fresh IPA for a further three hours. The discs were dried overnight at 30°C in a vacuum oven on filter paper before being hydrated in saline for several days. The resulting clear polymeric discs had a water content of 0.9% and a sessile contact angle of 87 degrees.

**EXAMPLE 8:** The following procedure was used to evaluate cell attachment and growth of corneal epithelial cells on the polymer of the invention:

Bovine corneal epithelial cells, of between culture passage numbers 2 - 4, were used to determine the relative cell attachment and growth performance of the polymer. Test polymers were cut into 6 mm diameter disks using a sterile Dermapunch (Registered trademark), with each sample prepared in triplicate. Replicate polymer samples were transferred to individual wells of a 96-well format tissue culture polystyrene (TCPS) tray and left overnight at room temperature in a phosphate-buffered saline solution containing 60 µg/ml penicillin and 100 µg/ml streptomycin. Cells were seeded onto each polymer sample, including replicates of TCPS alone, at a density of $5x10^3$ cells/well and cultured for seven days in a culture medium containing Dulbecco's Minimal Essential Medium and Ham's F12 (50:50, v/v) supplemented with 5 pg/ml insulin, 5 pg/ml transferrin, 5 ng/ml selenious acid, 60 pg/ml penicillin and 100 µg/ml streptomycin and foetal bovine serum 20% (v/v) serum. These cultures were maintained at 37°C in a humidified atmosphere of 5% $CO_2$ in air. The culture medium was changed every second day. After six days the cells were metabolically radiolabelled by incubating them overnight at 37°C with 5 µCi/ml $^{35}S$ methionine (Tran-$^{35}S$-Label, ICN) in methionine-free DMEM/Ham's F12. The culture medium was supplemented with the previously described additives. On day seven the radiolabelled medium was removed and the cells were washed with fresh unlabelled DMEM/Ham's F12. The cells were then enzymically removed from the test surfaces with 0.1% trypsin/0.02% EDTA and the amount of incorporated $^{35}S$ measured on a liquid scintillation counter. The relative number of cells was expressed as a mean (± SD) percentage of the counts obtained for cells grown on the TCPS control surface after the same period of time.

The following results were found: Bovine corneal epithelial cells attached and grew on the polymer formulation of Example 7 indicating that the polymer of the invention is suitable for the attachment and growth of corneal epithelial cells and tissue. The number of corneal epithelial cells present on the polymer surface after 7 days of culture was 98% of that present on the TCPS surface. The cells cultured on the polymer surface showed the well spread morphology that was also seen for the cells cultured on the TCPS surface.

These data indicate that the polymers according to this invention are suitable for application in artificial cornea and other implants as well as cell attachment and growth substrata.

## Claims

**1.** A macromonomer of the formula I:

$$\text{Q-PFPE-L-M-L-PFPE-Q} \qquad \text{(I)}$$

wherein:

Q may be the same or different and is a polymerizable group;
PFPE may be the same or different and is a perfluorinated polyether of formula II:

$$\text{-O-}CH_2CF_2O(CF_2CF_2O)_x(CF_2O)_y\ CF_2CH_2O\text{-} \qquad \text{(II)}$$

wherein the $CF_2CF_2O$ and $CF_2O$ units may be randomly distributed or distributed as blocks throughout the chain, wherein x is 0 to 20 and y is 0 to 25 with the proviso that y = 0 is excluded, and wherein x and y may be the same or different such that the molecular weight of the PFPE is in the range of from 242 to 4,000;

L may be the same or different and is a bivalent residue of any difunctional moiety able to react with hydroxyl or amino; and

M is a residue from a difunctional polymer or copolymer wherein M has a molecular weight of 180 to 6000 comprising silicone repeat units of formula III

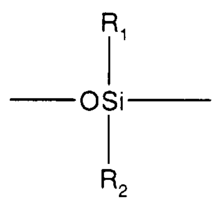

(III)

where $R^1$ and $R^2$ may be the same or different and are selected from the group consisting of hydrogen, alkyl, aryl, halosubstituted alkyl; wherein M contains a terminal functionality at each end independently selected from the group consisting of hydroxy and amino.

**2.** A macromonomer according to claim 1 wherein Q is a polymerizable group which comprises an ethylenically unsaturated moiety.

**3.** A macromonomer according to either claim 1 or claim 2 wherein Q is selected from the group consisting of acryloyl, methacryloyl, styryl, acrylamido, acrylamidoalkyl, urethanemethacrylate, or any substituted derivatives thereof.

**4.** A macromonomer according to any one of claims 1 to 3 wherein L is a bivalent residue (-C(O)-NH-R-NH-C(O)-) of a diisocyanate.

**5.** A macromonomer according to claim 4 wherein the bivalent residue is derived from a diisocyanate selected from the group consisting of trimethyl-hexamethylenediisocyanate (TMHMDI), isophorone diisocyanate (IPDI), methylenediphenyl diisocyanate (MDI) and 1,6-hexamethylenediisocyanate (HMDI).

**6.** A macromonomer according to any one of claims 1 to 5 wherein x is in the range of from 8 to 20.

**7.** A macromonomer according to any one of claims 1 to 6 wherein x is in the range from 8 to 12.

**8.** A macromonomer according to any one of claims 1 to 7 wherein y is in the range of from 10 to 25.

**9.** A macromonomer according to any one of claims 1 to 8 wherein y is in the range from 10 to 14.

**10.** A macromonomer according to any one of claims 1 to 9 wherein the difunctional polymer from which M is derived contains a terminal hydroxyl functionality at each end.

**11.** A macromonomer according to claim 10 wherein said terminal functionality is joined to the siloxane units by alkylene or other non-reactive spacer.

**12.** A macromonomer according to claim 11 wherein said terminal functionality is a hydroxyalkyl.

**13.** A macromonomer according to claim 12 wherein said terminal functionality is independently selected from the group consisting of hydroxypropyl and hydroxybutyl.

**14.** A macromonomer according to claim 11 wherein said terminal functionality is hydroxyalkoxyalkyl.

**15.** A macromonomer according to claim 12 wherein said terminal functionality is hydroxypropyl.

**16.** A macromonomer according to any one of claims 1 to 15 wherein the molecular weight of the PFPE is in the range of from 800 to 4000, L is the bivalent residue derived from trimethylhexamethylene diisocyanate (TMHMDI), Q is the residue derived from isocyanatoethyl methacrylate and the molecular weight of M is about 1000.

17. A macromonomer according to claim 16 wherein the molecular weight of the PFPE is about 2000.

18. A macromonomer of formula IV

$$CH_2=C(CH_3)\text{-}COO\text{-}C_2H_4\text{-}NHCO\text{-}PFPE\text{-}CONH\text{-}R\text{-}NHCO\text{-}$$
$$OCH_2CH_2CH_2\text{-}Si(CH_3)_2\text{-}(OSi(CH_3)_2)_{11}\text{-}CH_2CH_2CH_2O\text{-}CONH\text{-}R\text{-}$$
$$\text{-}NHCO\text{-}PFPE\text{-}CONH\text{-}C_2H_4\text{-}OCO\text{-}C(CH_3)=CH_2 \quad (IV)$$

wherein PFPE is a perfluorinated polyether of formula II

$$\text{-}OCH_2CF_2O\ (CF_2CF_2O)_x(CF_2O)_y\ CF_2CH_2O\text{-} \quad (II)$$

wherein the $CF_2CF_2O$ and $CF_2O$ units may be randomly distributed or distributed as blocks throughout the chain, wherein x is in the range of from 8 to 10 and y is in the range of from 10 to 14, and wherein x and y may be the same or different such that the molecular weight of the PFPE is in the range of from 1748 to 2244;
and wherein R is the trimethylhexamethylene component of TMHMDI.

19. A process for the production of a polymer comprising the step of polymerizing a macromonomer of any one of claims 1 to 18.

20. A process according to claim 19 for the production of a polymer comprising the step of copolymerizing a macromonomer of any one of claims 1 to 18.

21. A process according to claim 19 for the production of a polymer comprising the step of homopolymerizing a macromonomer of any one of claims 1 to 18.

22. A process according to claim 21 wherein the macromonomer is converted to a polymer in the presence of at least one solvent.

23. A process according to claim 22 wherein the solvent is selected from the group consisting of esters, alcohols, ethers, and halogenated solvents.

24. A process according to either of claims 22 or 23 wherein the solvent is selected from the group consisting of isopropyl acetate, tert-butyl acetate, 2-(trifluoromethyl)-2-propanol, trichlorotrifluoroethane and perfluoro-1,3-dimethylcyclohexane.

25. A process according to claim 20 wherein the macromonomer is copolymerized with at least one comonomer comprising one or more ethylenically unsaturated groups selected from the group consisting of acryloyl, methacryloyl, styryl, acrylamido, acrylamidoalkyl, urethanemethacrylate, or any substituted derivatives thereof, other macromonomers according to any one of claims 1 to 16, and mixtures thereof.

26. A process according to claim 25 wherein the comonomer is selected from the group consisting of dihydroperfluorooctyl acrylate, 1,1-dihydroperfluorobutyl acrylate, tris(trimethylsilyloxy)propyl methacrylate or acrylate, and amine-containing comonomers, such as N,N-dimethylaminoethyl methacrylate, N,N-dimethyl acrylamide and N, N-dimethylaminoethyl-acrylamide, and mixtures thereof.

27. A process according to any one of claims 20, 25 or 26 wherein the macromonomer is copolymerized with at least one comonomer wherein each comonomer is present in the polymerization formulation in the range of from 0 to 60% by weight of the formulation.

28. A process according to any one of claims 20, 25, 26 or 27 wherein the macromonomer is copolymerized with at least one comonomer wherein each comonomer is present in the polymerization formulation in the range of 0 to 40% by weight of the formulation.

**29.** A polymer produced by a process according to any one of claims 19 to 28.

**30.** A soft contact lens manufactured from a polymer produced by a process according to any one of claims 19 to 28.

**31.** A soft contact lens comprising a polymerized macromonomer according to any one of claims 1 to 16.

**32.** Use of a macromonomer of the formula I according to claim 1, for the manufacture of a soft contact lens.

**33.** A process for the production of a soft contact lens according to any one of claims 30 or 31 wherein said process comprises the steps of:

(a) mixing at least one macromonomer according to any one of claims 1 to 16 with an optional solvent, a photoinitiator, an optional comonomer to form a polymerization mixture;
(b) flushing the polymerization mixture with nitrogen;
(c) charging the polymerization mixture into the concave half of a polypropylene mould;
(d) closing the charged mould;
(e) irradiating the charged mould with UV radiation; and
(f) separating the halves of the mould and extracting the polymerized lens.

**34.** A corneal implant comprising a polymerized macromonomer according to any one of claims 1 to 16.

**35.** A corneal implant according to claim 34 for use in surgical implantation into or onto the cornea of a mammal wherein said implant has an optical axis region with optical characteristics which provide visual acuity therethrough and a porosity sufficient to allow passage therethrough of tissue fluid components having a molecular weight greater than 10,000 daltons, thereby providing for a flux of tissue fluid between cells anterior of the implant and cells posterior thereof, wherein the porosity of the optical axis region is such that it allows the flux of tissue fluid components whilst excluding ingrowth of ocular tissue.

**36.** A corneal implant according to claim 34 to 35 wherein the implant is coated with one or more components which promote the growth of tissue adjacent to the implant and/or cell adhesion to the implant.

**37.** A corneal implant according to any one of claims 34 to 36 wherein porosity of the implant is provided by a plurality of pores having a size sufficient to allow passage through the implant of proteinaceous tissue fluid components having a molecular weight greater than 10,000 daltons ($1.66 \times 10^{-23}$ kg) but which excludes tissue ingrowth.

**38.** A corneal implant according to claim 37 wherein said plurality of pores comprise a diameter of 15 nanometres to 0.5 micrometres.

**39.** A cell growth substrate comprising a polymerized macromonomer according to any one of claims 1 to 16.

**40.** A medical implant comprising a polymerized macromonomer according to any one of claims 1 to 16.

**41.** Use of a macromonomer of the formula I according to claim 1 for the manufacture of a corneal implant, cell growth substrate or medical implant

**Patentansprüche**

**1.** Makromonomer der Formel I:

$$\text{Q-PFPE-L-M-L-PFPE-Q} \qquad (I),$$

worin:

Q gleich oder verschieden sein kann und eine polymerisierbare Gruppe darstellt;
PFPE gleich oder verschieden sein kann und ein perfluorierter Polyether der Formel II ist:

$$-O-CH_2CF_2O(CF_2CF_2O)_x(CF_2O)_yCF_2CH_2O- \quad (II),$$

worin die Einheiten $CF_2CF_2O$ und $CF_2O$ statistisch verteilt oder als Blöcke über die Kette verteilt sein können, wobei x 0 bis 20 ist und y 0 bis 25 ist, mit der Maßgabe, dass y=0 ausgeschlossen ist, und wobei x und y gleich oder verschieden sein können, so dass das Molekulargewicht von dem PFPE im Bereich von 242 bis 4 000 liegt;
L gleich oder verschieden sein kann und einen zweiwertigen Rest von einer beliebigen difunktionellen Einheit darstellt, die mit Hydroxyl oder Amino reagieren kann; und
M einen Rest von einem difunktionellen Polymer oder Copolymer darstellt, wobei M ein Molekulargewicht von 180 bis 6 000 aufweist, umfassend wiederkehrende Silikoneinheiten der Formel III

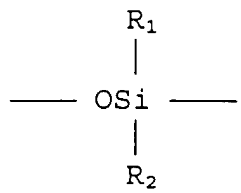

(III),

worin $R_1$ und $R_2$ gleich oder verschieden sein können und aus der Gruppe, bestehend aus Wasserstoff, Alkyl, Aryl, Halogen-substituiertem Alkyl, ausgewählt sind, wobei M an jedem Ende eine endständige Funktionalität, unabhängig ausgewählt aus der Gruppe, bestehend aus Hydroxy und Amino, enthält.

**2.** Makromonomer nach Anspruch 1, wobei Q eine polymerisierbare Gruppe darstellt, die eine ethylenisch ungesättigte Einheit umfasst.

**3.** Makromonomer nach Anspruch 1 oder Anspruch 2, wobei Q aus der Gruppe, bestehend aus Acryloyl, Methacryloyl, Styryl, Acrylamido, Acrylamidoalkyl, Urethanmethacrylat oder beliebig substituierten Derivaten davon, ausgewählt ist.

**4.** Makromonomer nach einem der Ansprüche 1 bis 3, wobei L einen zweiwertigen Rest (-C(O)-NH-R-NH-C(O)-) eines Diisocyanats darstellt.

**5.** Makromonomer nach Anspruch 4, wobei der zweiwertige Rest von einem Diisocyanat, ausgewählt aus der Gruppe, bestehend aus Trimethylhexamethylendiisocyanat (TMHMDI), Isophorondiisocyanat (IPDI), Methylendiphenyldiisocyanat (MDI) und 1,6-Hexamethylendiisocyanat (HMDI), abgeleitet ist.

**6.** Makromonomer nach einem der Ansprüche 1 bis 5, wobei x im Bereich von 8 bis 20 liegt.

**7.** Makromonomer nach einem der Ansprüche 1 bis 6, wobei x im Bereich von 8 bis 12 liegt.

**8.** Makromonomer nach einem der Ansprüche 1 bis 7, wobei y im Bereich von 10 bis 25 liegt.

**9.** Makromonomer nach einem der Ansprüche 1 bis 8, wobei y im Bereich 10 bis 14 liegt.

**10.** Makromonomer nach einem der Ansprüche 1 bis 9, wobei das difunktionelle Polymer, von dem M abgeleitet ist, an jedem Ende eine endständige Hydroxylfunktionalität enthält.

**11.** Makromonomer nach Anspruch 10, wobei die endständige Funktionalität durch Alkylen oder andere nichtreaktive Abstandsgruppen an die Siloxaneinheiten gebunden ist.

**12.** Makromonomer nach Anspruch 11, wobei die endständige Funktionalität ein Hydroxyalkyl ist.

**13.** Makromonomer nach Anspruch 12, wobei die endständige Funktionalität unabhängig aus der Gruppe, bestehend aus Hydroxypropyl und Hydroxybutyl, ausgewählt ist.

**14.** Makromonomer nach Anspruch 11, wobei die endständige Funktionalität Hydroxyalkoxyalkyl ist.

**15.** Makromonomer nach Anspruch 12, wobei die endständige Funktionalität Hydroxypropyl ist.

**16.** Makromonomer nach einem der Ansprüche 1 bis 15, wobei das Molekulargewicht von dem PFPE im Bereich von 800 bis 4000 liegt, L den von Trimethylhexamethylendiisocyanat (TMHMDI) abgeleiteten zweiwertigen Rest darstellt, Q den von Isocyanatoethylmethacrylat abgeleiteten Rest darstellt und das Molekulargewicht von M etwa 1000 ist.

**17.** Makromonomer nach Anspruch 16, wobei das Molekulargewicht von dem PFPE etwa 2000 ist.

**18.** Makromonomer der Formel IV

$$CH_2{=}C(CH_3)\text{-}COO\text{-}C_2H_4\text{-}NHCO\text{-}PFPE\text{-}CONH\text{-}R\text{-}NHCO\text{-}$$

$$OCH_2CH_2CH_2\text{-}Si(CH_3)_2\text{-}(OSi(CH_3)_2)_{11}\text{-}CH_2CH_2CH_2O\text{-}CONH\text{-}R\text{-}$$

$$\text{-}NHCO\text{-}PFPE\text{-}CONH\text{-}C_2H_4\text{-}OCO\text{-}C(CH_3){=}CH_2 \qquad (IV)$$

worin PFPE ein perfluorierter Polyether der Formel II ist,

$$\text{-}OCH_2CF_2O(CF_2CF_2O)_x(CF_2O)_yCF_2CH_2O\text{-} \qquad (II),$$

worin die Einheiten $CF_2CF_2O$ und $CF_2O$ statistisch verteilt oder als Blöcke über die Kette verteilt sein können, wobei x im Bereich von 8 bis 10 liegt und y im Bereich von 10 bis 14 liegt, und wobei x und y gleich oder verschieden sein können, so dass das Molekulargewicht von dem PFPE im Bereich von 1748 bis 2244 liegt;

und wobei R die Trimethylhexamethylenkomponente von TMHMDI ist.

**19.** Verfahren zur Herstellung eines Polymers, umfassend den Schritt des Polymerisierens eines Makromonomers nach einem der Ansprüche 1 bis 18.

**20.** Verfahren nach Anspruch 19 zur Herstellung eines Polymers, umfassend den Schritt des Copolymerisierens eines Makromonomers nach einem der Ansprüche 1 bis 18.

**21.** Verfahren nach Anspruch 19 zur Herstellung eines Polymers, umfassend den Schritt des Homopolymerisierens eines Makromonomers nach einem der Ansprüche 1 bis 18.

**22.** Verfahren nach Anspruch 21, wobei das Makromonomer in Gegenwart von mindestens einem Lösungsmittel zu einem Polymer umgewandelt wird.

**23.** Verfahren nach Anspruch 22, wobei das Lösungsmittel aus der Gruppe, bestehend aus Estern, Alkoholen, Ethern und halogenierten Lösungsmitteln, ausgewählt ist.

**24.** Verfahren nach einem der Ansprüche 22 oder 23, wobei das Lösungsmittel aus der Gruppe, bestehend aus Essigsäureisopropylester, Essigsäure-tert-butylester, 2-(Trifluormethyl) -2-propanol, Trichlortrifluorethan und Perfluor-1,3-dimethylcyclohexan, ausgewählt ist.

**25.** Verfahren nach Anspruch 20, wobei das Makromonomer mit mindestens einem Comonomer, umfassend eine oder mehrere ethylenisch ungesättigte Gruppen, ausgewählt aus der Gruppe, bestehend aus Acryloyl, Methacryloyl, Styryl, Acrylamido, Acrylamidoalkyl, Urethanmethacrylat, oder beliebig substituierten Derivaten davon, anderen Makromonomeren nach einem der Ansprüche 1 bis 16 und Gemischen davon, copolymerisiert wird.

**26.** Verfahren nach Anspruch 25, wobei das Comonomer aus der Gruppe, bestehend aus Acrylsäuredihydroperfluoroctylester, Acrylsäure-1,1-dihydroperfluorbutylester, Methacrylsäure- oder Acrylsäuretris(trimethylsilyloxy)propylester und Amin-enthaltenden Comonomeren, wie Methacrylsäure-N,N-dimethylaminoethylester, N,N-Dimethylacrylamid und N,N-Dimethylaminoethylacrylamid und Gemischen davon, ausgewählt ist.

**27.** Verfahren nach einem der Ansprüche 20, 25 oder 26, wobei das Makromonomer mit mindestens einem Comonomer copolymerisiert wird, wobei jedes Comonomer in der Polymerisationsformulierung im Bereich von 0 bis 60 Gewichtsprozent der Formulierung vorliegt.

**28.** Verfahren nach einem der Ansprüche 20, 25, 26 oder 27, wobei das Makromonomer mit mindestens einem Comonomer copolymerisiert wird, wobei jedes Comonomer in der Polymerisationsformulierung im Bereich von 0 bis 40 Gewichtsprozent der Formulierung vorliegt.

**29.** Polymer, hergestellt durch ein Verfahren nach einem der Ansprüche 19 bis 28.

**30.** Weiche Kontaktlinse, gefertigt aus einem Polymer, hergestellt durch ein Verfahren nach einem der Ansprüche 19 bis 28.

**31.** Weiche Kontaktlinse, umfassend ein polymerisiertes Makromonomer nach einem der Ansprüche 1 bis 16.

**32.** Verwendung eines Makromonomers der Formel I nach Anspruch 1 zur Herstellung einer weichen Kontaktlinse.

**33.** Verfahren zur Herstellung einer weichen Kontaktlinse nach einem der Ansprüche 30 oder 31, wobei das Verfahren die Schritte umfasst von:

(a) Vermischen von mindestens einem Makromonomer nach einem der Ansprüche 1 bis 16 mit einem gegebenenfalls vorliegenden Lösungsmittel, einem Photostarter, einem gegebenenfalls vorliegenden Comonomer, unter Bildung eines Polymerisationsgemisches;
(b) Spülen des Polymerisationsgemisches mit Stickstoff;
(c) Beschicken einer konkaven Polypropylenhalbform mit dem Polymerisationsgemisch;
(d) Schließen der beschickten Form;
(e) Bestrahlen der beschickten Form mit UV-Strahlung; und
(f) Trennen der Hälften der Form und Extrahieren der polymerisierten Linse.

**34.** Corneales Implantat, umfassend ein polymerisiertes Makromonomer nach einem der Ansprüche 1 bis 16.

**35.** Corneales Implantat nach Anspruch 34 zur Verwendung bei der chirurgischen Implantation in oder auf die Cornea eines Säugers, wobei das Implantat einen optischen Achsenbereich mit optischen Eigenschaften, die dort hindurch Sehschärfe bereitstellen und einer für den Durchgang von Gewebsflüssigkeitskomponenten mit einem Molekulargewicht größer als 10 000 Dalton dort hindurch ausreichenden Porosität aufweist, wodurch für einen Fluss von Gewebsflüssigkeit zwischen Zellen vor dem Implantat und Zellen, die sich dahinter befinden, gesorgt wird, wobei die Porosität des optischen Achsenbereichs dergestalt ist, dass sie den Fluss von Gewebsflüssigkeitskomponenten ermöglicht, während das Einwachsen von okularem Gewebe ausgeschlossen ist.

**36.** Corneales Implantat nach Anspruch 34 bis 35, wobei das Implantat mit einer oder mehreren Komponenten beschichtet ist, die das Wachstum von Gewebe, das zu dem Implantat benachbart ist und/oder die Zellanhaftung an dem Implantat fördern.

**37.** Corneales Implantat nach einem der Ansprüche 34 bis 36, wobei die Porosität des Implantats durch eine Vielzahl von Poren bereitgestellt wird, die eine für den Durchgang von proteinartigen Gewebsflüssigkeitskomponenten mit einem Molekulargewicht größer als 10 000 Dalton (1,66 x $10^{-23}$ kg) durch das Implantat ausreichende Größe aufweisen, jedoch Einwachsen ausschließt.

**38.** Corneales Implantat nach Anspruch 37, wobei die Vielzahl von Poren einen Durchmesser von 15 Nanometern bis 0,5 Mikrometern umfasst.

**39.** Zellwachstumssubstrat, umfassend ein polymerisiertes Makromonomer nach einem der Ansprüche 1 bis 16.

**40.** Medizinisches Implantat, umfassend ein polymerisiertes Makromonomer nach einem der Ansprüche 1 bis 16.

**41.** Verwendung eines Makromonomers der Formel I nach Anspruch 1 zur Herstellung eines cornealen Implantats,

Zellwachstumssubstrats oder medizinischen Implantats.

## Revendications

**1.** Un macromonomère de formule I:

$$Q\text{-}PFPE\text{-}L\text{-}M\text{-}L\text{-}PFPE\text{-}Q \qquad (I)$$

où

Q peut être identique ou différent et signifie un groupe polymérisable;

PFPE peut être identique ou différent et signifie un polyéther perfluoré de formule II:

$$-O-CH_2CF_2O(CF_2CF_2O)_x(CF_2O)_yCF_2CH_2O- \qquad (II)$$

où les unités $CF_2CF_2O$ et $CF_2O$ peuvent être réparties au hasard ou réparties comme blocs tout au long de la chaîne, où x signifie de 0 à 20 et y signifie de 0 à 25 avec la condition que y = 0 soit exclu et où x et y peuvent être identiques ou différents pour que le poids moléculaire du PFPE soit compris entre 242 et 4000;

L peut être identique ou différent et signifie un résidu bivalent de n'importe quel reste difonctionnel capable de réagir avec un groupe hydroxyle ou amino; et

M signifie un résidu d'un polymère difonctionnel ou d'un copolymère où M a un poids moléculaire de 180 à 6000 comprenant des unités récurrentes de silicone de formule III

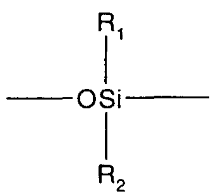

(III)

où $R^1$ et $R^2$ peuvent être identiques ou différents et sont choisis parmi le groupe comprenant l'hydrogène, un groupe alkyle, aryle, alkyle halosubstitué; où M contient une fonctionnalité terminale à chaque extrémité choisie indépendamment parmi le groupe comprenant un groupe hydroxy et amino.

**2.** Un macromonomère selon la revendication 1, où Q signifie un groupe polymérisable qui comprend un reste à insaturation éthylénique.

**3.** Un macromonomère selon la revendication 1 ou la revendication 2, où Q est choisi parmi le groupe comprenant l'acryloyle, le méthacryloyle, le styryle, l'acrylamido, l'acrylamidoalkyle, le méthacrylate d'uréthane ou l'un quelconque de leurs dérivés substitués.

**4.** Un macromonomère selon l'une quelconque des revendications 1 à 3, où L signifie un résidu bivalent (-C(O)-NH-R-NH-C(O)-) d'un diisocyanate.

**5.** Un macromonomère selon la revendication 4, où le résidu bivalent est dérivé d'un diisocyanate choisi parmi le groupe comprenant le diisocyanate de triméthylhexaméthylène (TMHMDI), le diisocyanate d'isophorone (IPDI), le diisocyanate de méthylènediphényle (MDI) et le diisocyanate de 1,6-hexaméthylène (HMDI).

**6.** Un macromonomère selon l'une quelconque des revendications 1 à 5, où x est compris entre 8 et 20.

**7.** Un macromonomère selon l'une quelconque des revendications 1 à 6, où x est compris entre 8 et 12.

**8.** Un macromonomère selon l'une quelconque des revendications 1 à 7, où y est compris entre 10 et 25.

**9.** Un macromonomère selon l'une quelconque des revendications 1 à 8, où y est compris entre 10 et 14.

**10.** Un macromonomère selon l'une quelconque des revendications 1 à 9, où le polymère difonctionnel duquel M est dérivé contient une fonctionnalité terminale hydroxyle à chaque extrémité.

**11.** Un macromonomère selon la revendication 10, où ladite fonctionnalité terminale est jointe aux unités de siloxane par un groupe alkylène ou un autre groupe espaceur non réactif.

**12.** Un macromonomère selon la revendication 11, où ladite fonctionnalité terminale est un groupe hydroxyalkyle.

**13.** Un macromonomère selon la revendication 12, où ladite fonctionnalité terminale est choisie indépendamment parmi le groupe comprenant un groupe hydroxypropyle et hydroxybutyle.

**14.** Un macromonomère selon la revendication 11, où ladite fonctionnalité terminale est un groupe hydroxyalcoxyalkyle.

**15.** Un macromonomère selon la revendication 12, où ladite fonctionnalité terminale est un groupe hydroxypropyle.

**16.** Un macromonomère selon l'une quelconque des revendications 1 à 15, où le poids moléculaire du PFPE est compris entre 800 et 4000, L signifie le résidu bivalent dérivé du diisocyanate de triméthylhexaméthylène (TMHMDI), Q signifie le résidu dérivé du méthacrylate d'isocyanatoéthyle et le poids moléculaire de M est d'environ 1000.

**17.** Un macromonomère selon la revendication 16, où le rapport moléculaire du PFPE est d'environ 2000.

**18.** Un macromonomère de formule IV

$$CH_2{=}C(CH_3)\text{-}COO\text{-}C_2H_4\text{-}NHCO\text{-}PFPE\text{-}CONH\text{-}R\text{-}NHCO\text{-}$$
$$OCH_2CH_2CH_2\text{-}Si(CH_3)_2\text{-}(OSi(CH_3)_2)_{11}\text{-}CH_2CH_2CH_2O\text{-}CONH\text{-}R\text{-}$$
$$\text{-}NHCO\text{-}PFPE\text{-}CONH\text{-}C_2H_4\text{-}OCO\text{-}C(CH_3){=}CH_2 \qquad (IV)$$

où PFPE signifie un polyéther perfluoré de formule II

$$\text{-}OCH_2CF_2O\ (\ CF_2CF_2O\ )_x(CF_2O\ )_yCF_2CH_2O\text{-} \qquad (II)$$

où les unités $CF_2CF_2O$ et $CF_2O$ peuvent être réparties au hasard ou réparties comme blocs tout au long de la chaîne, où x est compris entre 8 et 10 et y est compris entre 10 et 14, et où x et y peuvent être identiques ou différents pour que le poids moléculaire du PFPE soit compris entre 1748 et 2244;
et où R signifie un composant triméthylhexaméthylène du composant TMHMDI.

**19.** Un procédé de production d'un polymère comprenant l'étape de polymérisation d'un macromonomère selon l'une quelconque des revendications 1 à 18.

**20.** Un procédé selon la revendication 19 pour la production d'un polymère comprenant l'étape de copolymérisation d'un macromonomère selon l'une quelconque des revendications 1 à 18.

**21.** Un procédé selon la revendication 19 pour la production d'un polymère comprenant l'étape d'homopolymérisation d'un macromonomère selon l'une quelconque des revendications 1 à 18.

**22.** Un procédé selon la revendication 21, où le macromonomère est transformé en polymère en présence d'au moins

un solvant.

**23.** Un procédé selon la revendication 22, où le solvant est choisi parmi le groupe comprenant des esters, des alcools, des éthers et des solvants halogénés.

**24.** Un procédé selon la revendication 22 ou la revendication 23, où le solvant est choisi parmi le groupe comprenant l'acétate d'isopropyle, l'acétate de tert.-butyle, le 2-(trifluorométhyl)-2-propanol, le trichlorotrifluoroéthane et le perfluoro-1,3-diméthylcyclohexane.

**25.** Un procédé selon la revendication 20, où le macromonomère est copolymérisé avec au moins un comonomère comprenant un ou plusieurs groupes à insaturation éthylénique choisis parmi le groupe comprenant l'acryloyle, le méthacryloyle, le styryle, l'acrylamido, l'acrylamidoalkyle, le méthacrylate d'uréthane, ou n'importe lequel de leurs dérivés, d'autres macromonomères selon l'une quelconque des revendications 1 à 16 et leurs mélanges.

**26.** Un procédé selon la revendication 25, où le comonomère est choisi parmi le groupe de l'acrylate de dihydroperfluorooctyle, l'acrylate de 1,1-dihydroperfluorobutyle, le méthacrylate ou l'acrylate de tris(triméthylsilyloxy)propyle, et les comonomères contenant une amine, tels que le méthacrylate de N,N-diméthylaminoéthyle, le N,N-diméthylacrylamide et le N,N-diméthylaminoéthyl-acrylamide, et leurs mélanges.

**27.** Un procédé selon l'une quelconque des revendications 20, 25 ou 26, où le macromonomère est copolymérisé avec au moins un comonomère où chaque comonomère est présent dans la formulation de polymérisation dans un intervalle compris entre 0 et 60% en poids de la formulation.

**28.** Un procédé selon l'une quelconque des revendications 20, 25, 26 ou 27, où le macromonomère est copolymérisé avec au moins un comonomère où chaque comonomère est présent dans la formulation de polymérisation dans un intervalle compris entre 0 et 40% en poids de la formulation.

**29.** Un polymère produit selon un procédé selon l'une quelconque des revendications 19 à 28.

**30.** Une lentille de contact souple fabriquée à partir d'un polymère produit selon un procédé selon l'une quelconque des revendications 19 à 28.

**31.** Une lentille de contact souple comprenant un macromonomère polymérisé selon l'une quelconque des revendications 1 à 16.

**32.** L'utilisation d'un macromonomère de formule I selon la revendication 1, pour la fabrication d'une lentille de contact souple.

**33.** Un procédé de production d'une lentille de contact souple selon l'une quelconque des revendications 30 ou 31, où ledit procédé comprend les étapes suivantes:

(a) le mélange d'au moins un macromonomère selon l'une quelconque des revendications 1 à 16 avec un solvant optionnel, un photoinitiateur, un comonomère optionnel pour former un mélange de polymérisation;
(b) le balayage rapide du mélange de polymérisation avec de l'azote;
(c) le chargement du mélange de polymérisation dans la moitié concave d'un moule en polypropylène;
(d) la fermeture du moule chargé;
(e) l'irradiation du moule chargé avec un rayonnement UV; et
(f) la séparation des moitiés du moule et l'extraction de la lentille polymérisée.

**34.** Un implant cornéen comprenant un macromonomère polymérisé selon l'une quelconque des revendications 1 à 16.

**35.** Un implant cornéen selon la revendication 34 pour une utilisation dans l'implantation chirurgicale dans ou sur la cornée d'un mammifère, où ledit implant a une région d'axe optique avec des caractéristiques optiques qui fournissent une acuité visuelle à travers lui et une porosité suffisante pour permettre le passage à travers des composants du liquide interstitiel ayant un poids moléculaire supérieur à 10 000 daltons, fournissant ainsi un flux du liquide interstitiel entre les cellules antérieures de l'implant et ses cellules postérieures, où la porosité de la région de l'axe optique est telle qu'elle permet le flux des composants du liquide interstitiel tout en excluant la croissance vers l'intérieur de tissu oculaire.

**36.** Un implant cornéen selon les revendications 34 à 35, où l'implant est enrobé d'un ou de plusieurs composants qui favorisent la croissance du tissu adjacent à l'implant et/ou l'adhésion cellulaire à l'implant.

**37.** Un implant cornéen selon l'une quelconque des revendications 34 à 36, où la porosité de l'implant est fournie par une pluralité de pores ayant une dimension suffisante pour permettre le passage à travers l'implant des composants protéiniques du liquide interstitiel ayant un poids moléculaire supérieur à 10 000 daltons (1,66 x $10^{-23}$kg), mais qui exclut la croissance vers l'intérieur de tissu.

**38.** Un implant cornéen selon la revendication 37, où ladite pluralité de pores comprend un diamètre compris entre 15 nanomètres et 0,5 micromètre.

**39.** Un substrat de croissance cellulaire comprenant un macromonomère polymérisé selon l'une quelconque des revendications 1 à 16.

**40.** Un implant médical comprenant un macromonomère polymérisé selon l'une quelconque des revendications 1 à 16.

**41.** L'utilisation d'un macromonomère de formule I selon la revendication 1, pour la fabrication d'un implant cornéen, d'un substrat de croissance cellulaire ou d'un implant médical.